(19) Europäisches Patentamt
European Patent Office
Office européen des brevets

(11) **EP 3 187 471 B1**

(12) **EUROPÄISCHE PATENTSCHRIFT**

(45) Veröffentlichungstag und Bekanntmachung des Hinweises auf die Patenterteilung:
**15.07.2020 Patentblatt 2020/29**

(51) Int Cl.:
*C03C 3/087* *(2006.01)* *C03C 3/091* *(2006.01)*
*C03C 3/097* *(2006.01)*

(21) Anmeldenummer: **16199992.5**

(22) Anmeldetag: **22.11.2016**

(54) **THERMISCH VORGESPANNTES GLASELEMENT UND SEINE VERWENDUNGEN**

THERMALLY TEMPERED GLASS ELEMENT AND USES THEREOF

ÉLÉMENT EN VERRE PRÉCONTRAINT THERMIQUEMENT ET SES UTILISATIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2015 DE 102015120568**
**22.01.2016 DE 102016101090**

(43) Veröffentlichungstag der Anmeldung:
**05.07.2017 Patentblatt 2017/27**

(73) Patentinhaber: **Schott AG**
**55122 Mainz (DE)**

(72) Erfinder:
• **SCHWALL, Michael**
**55116 Mainz (DE)**

• **MIX, Christian**
**55122 Mainz (DE)**
• **ALKEMPER, Jochen**
**55270 Klein-Winternheim (DE)**
• **THOMAS, Peter**
**56073 Koblenz (DE)**

(74) Vertreter: **Blumbach · Zinngrebe Patentanwälte PartG mbB**
**Alexandrastraße 5**
**65187 Wiesbaden (DE)**

(56) Entgegenhaltungen:
**EP-A1- 0 638 526    EP-A1- 2 338 847**
**DE-A1- 2 756 555    DE-C1- 4 430 710**

EP 3 187 471 B1

**Beschreibung**

Gebiet der Erfindung

Die Erfindung betrifft allgemein vorgespannte Gläser. Insbesondere betrifft die Erfindung thermisch vorgespannte Glaselemente und deren Verwendung.

Hintergrund der Erfindung

Heute werden Borosilikatgläser mit niedrigem CTE (~3,3 ppm/K) als Scheiben in Backöfen mit Pyrolyse-Reinigungsfunktion verwendet. Durch den niedrigen linearen Temperaturausdehnungskoeffizienten (CTE) erhält die Glasscheibe eine gewisse Temperaturschockbeständigkeit. Die für die Anwendung als Sichtscheibe benötigte hohe Bruchfestigkeit vor dem Gebrauch kann dabei auch durch thermisches Vorspannen der Gläser erzielt werden. Hierbei werden die Gläser über die Glastemperatur $T_g$ erhitzt und abgeschreckt. Dabei hängt die Größe der eingeführten Vorspannung vom Temperaturausdehnungskoeffizienten und dem Temperaturgradienten im Vorspannprozess ab. Das standardmäßig verwendete Borosilikatglas muss üblicherweise auf über 750°C erhitzt werden, um eine nennenswerte Vorspannung (~60MPa) zu erreichen.

Nachteil des Stands der Technik ist, dass nach dem ersten Pyrolyse-Reinigungszyklus Borosilikatgläser mit niedrigem CTE (ca. 3,3 ppm/K) ca. 70% der Ausgangsvorspannung durch Relaxation verlieren. Entsprechend nimmt auch die Bruchfestigkeit ab. Hinzu kommt, dass durch die Relaxation der Glasstruktur sogenannte Compaction-Effekte auftreten, also eine Veränderung der Dichte, die zu Verformungen der Glasscheiben führt. Zusätzliche Nachteile sind zum einen die hohen Temperaturen, die notwendig sind, um Borosilikatgläser mit kleinem CTE vorzuspannen. So ist zum Vorspannen eines Borosilikatglases mit niedrigem thermischen Ausdehnungskoeffizienten eine Temperatur von über 750°C notwendig, wohingegen bei Kalk-Natron-Gläsern bereits eine Temperatur von 650°C ausreicht, um eine ausreichend hohe thermische Vorspannung und damit Bruchfestigkeit zu erzielen. Zum anderen ist der niedrige CTE eines solchen Glases nachteilig, welcher die Höhe der Vorspannung, welche mit Standard-Vorspannöfen eingebracht werden kann, stark begrenzt.

Die DE 4 325 656 C2 beschreibt die Herstellung eines als Brandschutzsicherheitsglas geeigneten vorgespannten Glaskörpers auf einer herkömmlichen Luftvorspannanlage. Der Glaskörper besitzt einen Wärmeausdehnungskoeffizienten zwischen 3 und $6*10^{-6} K^{-1}$, eine Wärmespannung zwischen 0,3 und 0,5 N/mm²/K, Die Glasübergangstemperatur $T_G$ liegt zwischen 535°C und 850°C, die Temperatur $T_{13}$, bei welcher die Viskosität des Glases bei $10^{13}$ dPa·s liegt, soll mehr als 560°C betragen. Der Erweichungspunkt nach Littleton, $T_{7,6}$ soll bei über 830°C und die Verarbeitungstemperatur $T_4$, bei welcher das Glas eine Viskosität von $10^4$ dPa·s aufweist, soll unterhalb von 1300°C liegen. Das Glas hat eine Zusammensetzung in Gew.-% auf Oxidbasis von 73-78, bevorzugt 57-64 für $SiO_2$, 11-18 für $Al_2O_3$, 5-10 für MgO, 5-10 für CaO, von 9-12 $B_2O_3$, wobei die Summe der Komponenten MgO, CaO, SrO, BaO, ZnO, $ZrO_2$ im Bereich von 6-10 Gew.-% liegt.

Die WO 2015/009483 A1 beschreibt ein alkalifreies Alumosilikatglas mit einer Zusammensetzung in Gew.-% auf Oxidbasis von 60 - 70 für $SiO_2$, 13 - 22 für $Al_2O_3$, 0 - 9 für $B_2O_3$, 1 - 6 für MgO, 0 - 5 für CaO, 1 - 5 für BaO, 2 - 12 für ZnO, und 0 - 3 für SrO, wobei der Gesamtgehalt $Al_2O_3$ + $B_2O_3$ + ZnO > 23 ist und die folgende Bedingung gilt: $B_2O_3$ + MgO - CaO - BaO - SrO < 6 Gew.-%. Das Glas soll eine niedrige thermische Ausdehnung und starke Säure- und Alkaliresistenzen aufweisen und soll als Kochfläche verwendbar sein. Das Glas soll eine niedrige thermische Ausdehnung < $30·10^{-7} K^{-1}$ aufweisen. Damit lässt sich dieses Glas allerdings nicht oder nur wenig thermisch vorspannen. Weiterhin führt der hohe $Al_2O_3$-Gehalt typischerweise zu hohen $T_{13}$ Werten, welche die gewünschte Vorspannung in einem Standrad-Vorspannofen nicht ermöglichen. Hohe $Al_2O_3$-Gehalte reduzieren zudem im Allgemeinen die Säureresistenz.

Die US 2005/145241 A beschreibt weiterhin eine Tür einer Kochvorrichtung mit Pyrolysefunktion, deren Tür eine Borosilikatglasscheibe beinhaltet. Die Glasscheibe ist mindestens in einer Region mit einer farbigen Schicht beschichtet. Dabei ist die farbige Schicht so ausgestaltet, dass die Festigkeit der Glasscheibe durch die Beschichtung nicht beeinflusst, also auch insbesondere nicht verringert wird.

Aus der US 2015/107575 A1 ist eine Ofentür bekannt, die eine äußere und innere Glasscheibe mit einer Zusammensetzung auf Oxidbasis von 55 - 70 Gew.-% $SiO_2$, 12-25 Gew.-% $Al_2O_3$, 0 - 0,5 Gew.-% $B_2O_3$, 0 - 2 Gew.-% $Li_2O$, 0 - 5 Gew.-% $Na_2O$+$K_2O$, 0 - 10 Gew.-% MgO, jeweils 0 - 15 Gew.-% CaO, SrO, BaO, 0 - 5 Gew.-% ZnO, und 5 - 25 RO mit RO=MgO+CaO+SrO+BaO+ZnO, 0 - 3 Gew.-% $TiO_2$ und 0 - 4 Gew.-% $ZrO_2$ beinhaltet.

DE 27 56 555 A1 und EP 2 338 847 A1 offenbaren weitere Glaszusammensetzungen.

Mit diesen aus dem Stand der Technik bekannten Gläsern liegt noch keine Lösung für das Problem vor, eine auch bei Temperaturen, die bei einer Pyrolyse-Reinigung auftreten, beständige Vorspannung einer Glasscheibe bereitzustellen, wobei die Glasscheibe zusätzlich auch noch eine hohe chemische Resistenz aufweisen soll. Gerade bei Anwendungen in einem Backofen unter den dort im Betrieb herrschenden Temperaturen und der dadurch bedingten höheren chemischen Reaktivität spielt die chemische Resistenz eine große Rolle. Die Vorspannung sollte auch einfach herstellbar sein. Dies bedeutet, dass das Glas mit den in einem üblichen Vorspannofen erzeugbaren Temperaturgradienten hinreichend hoch vorspannbar sein soll.

### Aufgabe der Erfindung

Somit ist es die Aufgabe der Erfindung, ein Glas bzw. eine Glasscheibe bereitzustellen, welche die Nachteile des Standes der Technik mindert. Dabei soll das Glas bzw. die Glasscheibe der vorliegenden Erfindung einfach thermisch vorspannbar sein, wobei die thermische Vorspannung auch gegenüber hohen Temperaturen beständig sein soll, und weiterhin eine hohe chemische Resistenz aufweisen. Ein weiterer Aspekt der Erfindung betrifft die Verwendung eines solchen Glases als Garraumtür oder für die Anwendung als Kochfläche.

### Zusammenfassung der Erfindung

Die Aufgabe wird gelöst durch ein Glaselement gemäß Anspruch 1. Bevorzugte Ausführungsformen finden sich in den Unteransprüchen. Ein weiterer Aspekt der Erfindung betrifft die Verwendung eines solchen Glaselements.

Das erfindungsgemäße Glas, mit welchem die vorstehend genannte Aufgabe gelöst wird, zeichnet sich dadurch aus, dass es mindestens eine Vorspannung von 40 MPa besitzt, beziehungsweise auf einen solchen Wert thermisch vorspannbar ist und dass die Vorspannung weniger als 10% durch thermische Behandlung (z.B. Pyrolyseofenprozesse) bis zu 500°C relaxiert. Des Weiteren ist das Glas mit Standardschmelztechniken herstellbar. Damit geht einher, dass die Verarbeitungstemperatur, also die Temperatur bei der das Glas eine Viskosität von $10^4$ dPa·s besitzt, höchstens 1350°C beträgt. Weiterhin weist das Glas gemäß einer Ausführungsform eine chemische Beständigkeit von HSL = 2,3,3 oder besser auf. Die erfindungsgemäßen Gläser zeigen zudem eine hohe mechanische Beständigkeit.

Die oben genannten Anforderungen werden dadurch erzielt, dass die Größe

$$(1) \qquad (750°C - T_{13})/(CTE_{Liq} - CTE_{Sol})$$

einen Wert von höchstens $5*10^6$ aufweist. Im Rahmen der vorliegenden Erfindung erfolgen alle Temperaturangaben in °C. Diese Größe hat die Dimension einer quadrierten Temperatur (°C², beziehungsweise K²). $CTE_{Liq}$ bezeichnet dabei den linearen thermischen Ausdehnungskoeffizienten des Glases oberhalb der Glasübergangstemperatur $T_g$ und $CTE_{Sol}$ den linearen thermischen Ausdehnungskoeffizienten des Glases im Temperaturbereich von 20°C bis 300°C. Beim angegebenen Wert handelt es sich um den nominalen mittleren thermischen Längenausdehnungskoeffizienten gemäß ISO 7991, welcher in statischer Messung bestimmt ist. $T_{13}$ ist die Temperatur am oberen Kühlpunkt, also die Temperatur, bei welcher das Glas eine Viskosität von $10^{13}$ dPa·s besitzt. Die Größe $T_g$ bezeichnet hierbei die sogenannte Transformationstemperatur oder auch Glasübergangstemperatur. Sie ist bestimmt durch den Schnittpunkt der Tangenten an die beiden Äste der Ausdehnungskurve bei der Messung mit einer Heizrate von 5K/min. Dies entspricht einer Messung nach ISO 7884-8 bzw. DIN 52324.

Die Erfindung betrifft also demgemäß ein thermisch vorgespanntes Glaselement mit zwei gegenüberliegenden, unter einer Druckspannung stehenden Seitenflächen, wobei die Druckspannung mindestens 40 MPa beträgt, wobei die Verarbeitungstemperatur, bei welcher die Viskosität des Glases des Glaselements bei $10^4$ dPa·s liegt, höchstens 1350°C beträgt, und wobei das Glas einen Verlauf der Viskosität und des Ausdehnungskoeffizienten in Abhängigkeit von der Temperatur aufweist, derart, dass die Größe gemäß obiger Beziehung 1 einen Wert von höchstens $5*10^6$ K² hat.

Gemäß einer Weiterbildung der Erfindung wird ein Ausdehnungskoeffizient $CTE_{Sol}$ des Glases im Bereich von 3,5 bis 6 ppm/K ($3,5·10^{-6}$ K⁻¹ bis $6·10^{-6}$ K⁻¹) verwendet.

Mit solchen Gläsern kann im Vergleich zu üblichen Borosilikatgläsern mit einem Ausdehnungskoeffizienten um 3,3 ppm/K eine höhere Vorspannung in das Glassubstrat eingebracht werden.

Gemäß noch einer Weiterbildung der Erfindung wird das Glas so gewählt, dass dessen Ausdehnungskoeffizient im erweichten Zustand, also oberhalb der Glasübergangstemperatur $T_g$, $CTE_{Liq}$, im Bereich von $11·10^{-6}$ K⁻¹ bis $45·10^{-6}$ K⁻¹ liegt.

Auf diese Weise muss das Glas zum Erreichen einer hohen Vorspannung auch nicht übermäßig erhitzt werden, da das Glas einen hohen Wärmeausdehnungskoeffizienten im erweichten Zustand hat. Dies führt auch dazu, dass der Wärmeübergangskoeffizient kleiner wird. Mit einem kleinen Wärmeübergangskoeffizient kann auch ein kleinerer Temperaturgradient angewendet werden, um eine bestimmte Vorspannung zu hervorzurufen.

Ein zusätzlicher Vorteil ist, dass durch die höher gewählten Temperaturausdehnungskoeffizienten im festen und erweichten Zustand das Bruchbild erfindungsgemäßer Glassubstrate eher dem von Sicherheitsglas entspricht. Bei konventionell verwendeten Borosilikatgläsern mit Temperaturausdehnungskoeffizienten im Bereich um 3,3 ppm/K ist das Bruchbild nicht mit dem von Sicherheitsglas zu vergleichen, was zu einem höheren Verletzungsrisiko beim Glasbruch führt. Dieses Risiko ist weiterhin nochmals erhöht, wenn die Vorspannung des Borosilikatglases relaxiert ist.

Dadurch, dass die Temperatur $T_{13}$ im Bereich von 600 - 730°C liegt, wird zum einen noch die Vorspannbarkeit in Standard-Vorspannöfen erfüllt, und zum anderen wird die Relaxation der Vorspannung unter 10% der Ausgangsspannung gehalten bei thermischen Belastungsprozessen (z.B. Pyrolyseofenprogrammen) bis 500°C.

Gemäß noch einer Weiterbildung der Erfindung weist das Glas zusätzlich eine hohe Dichte von zumindest 2,4 Gramm pro Kubikzentimeter auf. Es hat sich gezeigt, dass gerade solche Gläser mit hoher Dichte gut vorspannbar und resistenter gegen eine Relaxation der Vorspannung nach einer Pyrolyse-Reinigung sind.

Bevorzugt weist das erfindungsgemäße Glas eine chemische hohe Beständigkeit auf. Die chemische Beständigkeit von Gläsern wird dabei im Allgemeinen in drei Klassen angegeben, wobei zwischen der Hydrolyse-, der Säure- und der Laugenbeständigkeit des Glases unterschieden wird.

Die Bestimmung der Hydrolysebeständigkeit eines Glases und die Angabe einer hydrolytischen Klasse erfolgt dabei nach der Vorschrift ISO 719 bzw. DIN 12111. Je nach der Menge extrahierter Glasbestandteile werden entsprechend untersuchte Gläser in Klassen eingeteilt, wobei Klasse 1 diejenige Klasse bezeichnet, bei welcher nur wenig Material extrahiert wurde, und mit steigender Auslaugung des Glases durch hydrolytischen Angriff die Klassenzahl steigt.

Die Bestimmung der Säurebeständigkeit eines Glases bzw. der Säureklasse erfolgt nach der Vorschrift der DIN 12116. Auch hier erfolgt die Einteilung der Klasse entsprechend der Menge an extrahierten Glasbestandteilen, wobei die beste Klasse wiederum Klasse 1 ist.

Die Bestimmung der Laugenbeständigkeit eines Glases bzw. der Laugenklasse erfolgt nach ISO 695 bzw. DIN 52322. Auch hier ist die beste Klasse, also die mit der höchsten Laugenbeständigkeit, wiederum Klasse 1.

Die chemische Beständigkeit erfindungsgemäßer Gläser ist gemäß einer Ausführungsform der Erfindung gegeben durch eine Angabe der Klasse der hydrolytischen Beständigkeit H, der Säurebeständigkeit S und der Laugenbeständigkeit L zu mindestens 2, 3, 3.

Gemäß noch einer weiteren Ausführungsform der Erfindung ist das Glaselement in mindestens einem Bereich mit einer Beschichtung versehen, bevorzugt aus einer glasflussbasierten Beschichtung.

Glasflussbasierte Beschichtungen, auch als Emaille bezeichnet, gehen mit dem Substrat eine feste, durch partielles Aufschmelzen der Oberfläche bedingte Verbindung ein. Damit zeichnen sie sich gegenüber anderen Beschichtungen, welche keine solche Anschmelz-Reaktionszone aufweisen, besonders gute Haftfestigkeit auf. Durch ihren anorganischen Charakter weisen die so erhaltenen Beschichtungen auch eine besonders hohe chemische, thermische und mechanische Beständigkeit auf. Nachteilig an solchen Beschichtungen ist jedoch, dass sie die Festigkeit eines solcherart beschichteten Substrates empfindlich herabsetzen können. Besonders relevant ist dies, wenn das Substrat über eine niedrige thermische Ausdehnung verfügt. So kann es bei einem hinreichend großen Unterschied der thermischen Ausdehnungskoeffizienten von Substratmaterial und glasflussbasierter Beschichtung zum Auftreten von Abplatzungen und Rissen kommen. Demgegenüber zeichnet sich das erfindungsgemäße Glas bzw. das erfindungsgemäße Glaselement dadurch aus, dass es mit einer glasflussbasierten Beschichtung beschichtbar ist. Insbesondere weist gemäß einer bevorzugten Ausführungsform der Erfindung das Glaselement in mindestens einem Bereich eine Beschichtung, bevorzugt eine glasflussbasierte Beschichtung, auf.

Dabei ist gemäß einer nochmals bevorzugten Ausführungsform der Erfindung der thermische Ausdehnungskoeffizient der Beschichtung $CTE_{Coat}$ an den thermischen Ausdehnungskoeffizienten des Glaselements $CTE_{Sol}$ so angepasst, dass der Betrag der Differenz der thermischen Ausdehnungskoeffizienten,

$$\left| \Delta_{CTE} \right| = \left| CTE_{Sol} - CTE_{Coat} \right|$$

nicht mehr als 1 ppm/K beträgt, bevorzugt nicht mehr als 0,5 ppm/K und besonders bevorzugt nicht mehr als 0,3 ppm/K.

Ein erfindungsgemäßes Glaselement, welches zwei gegenüberliegende, unter einer Druckspannung stehende Seitenflächen aufweist, wobei die Druckspannung mindestens 40 MPa beträgt und bei dem die Verarbeitungstemperatur $T_4$ des Glases, bei welcher die Viskosität des Glases, aus welchem das Glaselement gebildet ist, bei $10^4$ dPas liegt, höchstens 1350°C beträgt, und das Glas weiterhin einen Verlauf der Viskosität und des Ausdehnungskoeffizienten in Abhängigkeit von der Temperatur aufweist derart, dass die Größe gemäß der Beziehung 1 einen Wert von höchstens $5*10^6$ $K^2$ aufweist, eignet sich für die Verwendung als Tür eines Garraums, beispielsweise in einem Elektroherd, insbesondere in einem Elektroherd, welcher eine Pyrolysefunktion aufweist. Allerdings ist es auch möglich, ein solches Glaselement als Kochfläche zu verwenden. Weiterhin möglich ist die Verwendung des Glaselements als Abdeckung für Heizelemente, insbesondere als Koch- oder Bratfläche, als Heizkörperabdeckung, als Grillfläche, als Kaminsichtscheibe, als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als Substrat für Hoch- oder extreme Niedrigtemperaturanwendungen, als Ofenfenster für Verbrennungsöfen, als Hitzschild zur Abschirmung heißer Umgebungen, als Abdeckung für Strahler, insbesondere IR-Strahler, IR-Strahler, die in Geräten verbaut sind, Reflektoren, Flutlichter, Projektoren, Beamer, Fotokopierer, für Anwendungen mit thermomechanischer Belastung, beispielsweise in Nachtsichtgeräten, als Wafersubstrat, als Substrat mit UV-Schutz, als Material für Gehäusekomponenten beispielsweise von elektronischen Geräten und/oder Abdeckgläser für IT wie Mobiltelefone, Laptops, Scannergläser usw., als Fassadenplatte als Brandschutzverglasung oder als Komponente für ballistischen Schutz.

Gemäß einer weiteren Ausführungsform der Erfindung ist das Glaselement an mindestens einer Stelle mit einer Beschichtung versehen. Bevorzugt handelt es sich bei dieser mindestens einen Beschichtung um eine glassfluss-basierte Beschichtung oder ein Emaille.

Gemäß einer besonders bevorzugten Ausführungsform der Erfindung ist der thermische Ausdehnungskoeffizient der Beschichtung $CTE_{Coat}$ an den thermischen Ausdehnungskoeffizienten des Glaselements $CTE_{Sol}$ so angepasst, dass der Betrag der Differenz der thermischen Ausdehnungskoeffizienten,

$$\left| \Delta_{CTE} \right| = \left| CTE_{Sol} - CTE_{Coat} \right|$$

nicht mehr als 1 ppm/K beträgt, bevorzugt nicht mehr als 0,5 ppm/K und besonders bevorzugt nicht mehr als 0,3 ppm/K.

Das Glaselement weist gemäß einer Ausführungsform der Erfindung eine Dicke größer oder gleich 2 mm und kleiner oder gleich 5 mm, bevorzugt zwischen größer oder gleich 3 mm und kleiner oder gleich 5 mm.

Beispiele

Beispiel 1 (nicht erfindungsgemäß)

Ein Zusammensetzungsbereich eines Glases ist gegeben durch folgende Zusammensetzung in Gew.-%:

| | |
|---|---|
| $SiO_2$ | 60-80 |
| $B_2O_3$ | 4-15 |
| $Al_2O_3$ | 3-15 |
| $Li_2O$ | 0-5 |
| $Na_2O$ | 0-10 |
| $K_2O$ | 0-6 |
| MgO | 0-8 |
| CaO | 0-10 |
| SrO | 0-5 |
| $TiO_2$ | 0-5 |
| $ZrO_2$ | 0-9 |

Ausführungsbeispiel 1

Ein weiterer Zusammensetzungsbereich eines Glases ist gemäß einer weiteren Ausführungsform der Erfindung gegeben durch folgende Zusammensetzung in Gew.-%:

| | |
|---|---|
| $SiO_2$ | 63-75 |
| $Al_2O_3$ | 8-21 |
| $Li_2O$ | 0-5 |
| $Na_2O$ | 0-14 |
| $K_2O$ | 0-5 |
| MgO | 0-12 |
| CaO | 0-18 |
| SrO | 0-5 |
| $TiO_2$ | 0-5 |
| $ZrO_2$ | 0-9 |

Beispiel 2 (nicht erfindungsgemäß)

Ein weiterer Zusammensetzungsbereich eines Glases ist weiterhin gegeben durch folgende Zusammensetzung in Gew.-%:

|        |       |
|--------|-------|
| SiO₂   | 50-70 |
| B₂O₃   | 0-8   |
| Al₂O₃  | 3-25  |
| Li₂O   | 0-8   |
| Na₂O   | 0-7   |
| K₂O    | 0-5   |
| MgO    | 0-5   |
| CaO    | 0-7   |
| SrO    | 0-5   |
| ZnO    | 0-3   |
| TiO₂   | 0-5   |
| ZrO₂   | 0-5   |
| P₂O₅   | 0-5   |

Weiterhin können die Gläser Nebenbestandteile und/oder Spuren aufweisen, beispielweise in Form von verfahrenstechnisch notwendigen Zusätzen wie beispielsweise Läutermitteln, so zum Beispiel $SnO_2$, $CeO_2$, $As_2O_3$, Cl-, F- oder Sulfate, oder Mittel zum Einstellen einer geeigneten Farbe sowie weitere Bestandteile, die sich beispielsweise als Verunreinigungen aufgrund von in den Rohstoffen notwendigerweise enthaltenen Spuren ergeben. Die Summe dieser weiteren Bestandteile liegt dabei in der Regel bei unter 2 Gew.-%.

In der nachfolgenden Tabelle sind die Zusammensetzungen und Eigenschaften von einem erfindungsgemäßen Glas (Glas 1), zwei Referenzgläser (Gläser 2 und 3) zusammen mit zwei Vergleichsbeispielen aufgelistet:

Tabelle 1

| Beispiel | Glas 1 | Glas 2 | Glas 3 | Vergleichsbeispiel 1 | Vergleichsbeispiel 2 |
|----------|--------|--------|--------|----------------------|----------------------|
| **SiO₂** | 70,7 | 64,0 | 62,0 | 80,7 | 49,45 |
| **B₂O₃** | | | 10,0 | 12,7 | 14,15 |
| **Al₂O₃** | 11,7 | 20,7 | 12,0 | 2,5 | 11,40 |
| **Li₂O** | | 6,0 | | | |
| **Na₂O** | 7,1 | 0,5 | 4,0 | 3,5 | |
| **K₂O** | | 0,2 | 1,5 | 0,6 | |
| **MgO** | 5,9 | 2,3 | 3,5 | | |
| **CaO** | 4,6 | | 3,0 | | |
| **SrO** | | | 4,0 | | |
| **BaO** | | | | | 24,05 |
| **ZnO** | | 1,0 | | | |
| **TiO₂** | | 1,7 | | | |
| **ZrO₂** | | 1,7 | | | |
| **P₂O₅** | | 1,2 | | | |
| **Nd₂O₃** | | 0,3 | | | |
| **SnO₂** | | 0,4 | | | |
| **As₂O₃** | | | | | 1,0 |
| **NaCl** | | | | 1,5 | |
| **F** | | | | | |
| **CTE$_{Sol}$ [1E-6/K]** | 5,8 | 4,65 | 4,05 | 3,25 | 4,5 |
| **CTE$_{Liq}$ [1E-6/K]** | 25 | 29 | 42 | 9,7 | 40 |

(fortgesetzt)

| Beispiel | Glas 1 | Glas 2 | Glas 3 | Vergleichsbeispiel 1 | Vergleichsbeispiel 2 |
|---|---|---|---|---|---|
| $T_g$ [°C] | 688 | 616 | 610 | 525 | 662 |
| $T_{13}$ [°C] | 698 | 631 | 625 | 560 | 663 |
| $T_4$ [°C] | 1297 | 1198 | 1176 | 1270 | 1215 |
| Dichte [g/cm³] | 2,44 | 2,46 | 2,46 | 2,22 | 2,72 |
| $(750-T_{13})/(CTE_{liquid} - CTE_{fest})$ [K²] | 2,7083 | 4,887 | 3,2938 | 29,4574 | 2,4507 |
| H Klasse DIN ISO719 | 1 | 1 | 2 | 1 | 1 |
| H DIN ISO 719 [µg/g] | 16 | 23 | 41 | 8 | 7 |
| S Klasse DIN 12116 | 2 | 3 | 3 | 1 | 4 |
| S DIN 12116 [mg/dm²] | 0,8 | 3,9 | 10,4 | 0,4 | 1202 |
| L Klasse DIN ISO 695 | 1 | 1 | 3 | 2 | 3 |
| L DIN ISO 695 [mg/dm²] | 61 | 55 | 212 | 152 | 460 |

Die Größe $T_g$ bezeichnet hierbei die sogenannte Transformationstemperatur oder auch Glasübergangstemperatur. Sie ist bestimmt durch den Schnittpunkt der Tangenten an die beiden Äste der Ausdehnungskurve bei der Messung mit einer Heizrate von 5K/min. Dies entspricht einer Messung nach ISO 7884-8 bzw. DIN 52324.

Die erfindungsgemäßen Gläser weisen gemäß einer bevorzugten Ausführungsform eine Dichte oberhalb von 2,4 g/cm³ auf, während die Dichte des Vergleichsbeispiels 1 bei unter 2,3 g/cm³ liegt.

Weiterhin liegt der Wert der oben angegebenen Beziehung (1) bei den erfindungsgemäßen Gläsern bei 4,885*10⁶ K² oder niedriger. Das Vergleichsbeispiel 1 weist demgegenüber einen etwa sechsfach größeren Wert auf.

<u>Beschreibung der Zeichnungen</u>

Nachfolgend wird zur genaueren Erläuterung der Erfindung auf die beigeschlossenen Figuren Bezug genommen. In den Figuren verweisen gleiche Bezugszeichen auf gleiche oder entsprechende Elemente.

Es zeigen:

Fig. 1 ein herkömmliches, thermisch vorgespanntes Glaselement mit Messwerten der Vorspannung nach einem Pyrolysezyklus, sowie

Fig. 2 ein erfindungsgemäßes Glaselement, welches in einem Bereich mit einer Beschichtung versehen ist.

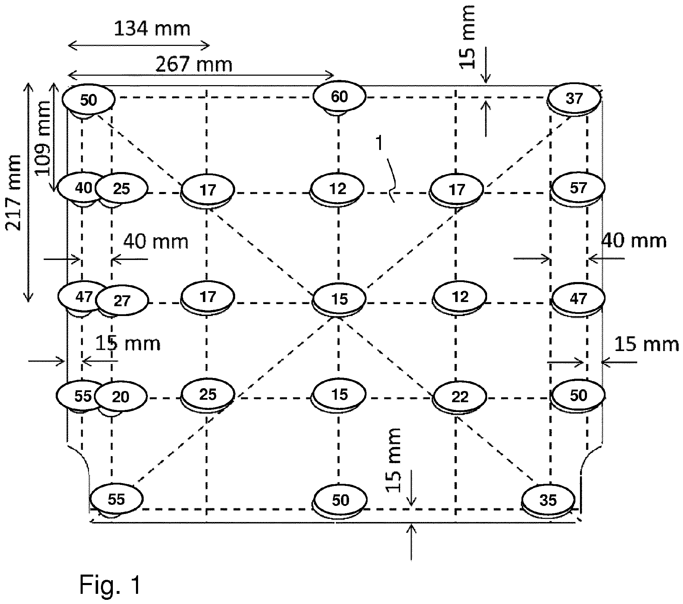

In Fig. 1 ist der Umriss eines Glaselements für einen Backofen dargestellt. Bei der Glasscheibe handelt es sich um ein Borosilikatglas gemäß dem Vergleichsbeispiel der oben angegebenen Tabelle. Das Glaselement bzw. die Glasscheibe wurde einer Temperaturbehandlung ausgesetzt, welche der Temperaturbelastung nach zwei Pyrolyse-Reinigungszyklen entspricht.

Die Zahlen in den ovalen Feldern zeigen die am Ort des jeweiligen Felds gemessene verbleibende Vorspannung. Wie ersichtlich ist die Vorspannung am Rand der Scheibe mit über 50 MPa noch recht hoch, nimmt aber zur Mitte hin deutlich ab. In der Mitte der Scheibe sind gerade noch 17 MPa erhalten geblieben. Damit sinkt die Vorspannung also bereits nach kurzer Zeit auf weniger als die Hälfte des ursprünglichen Werts ab.

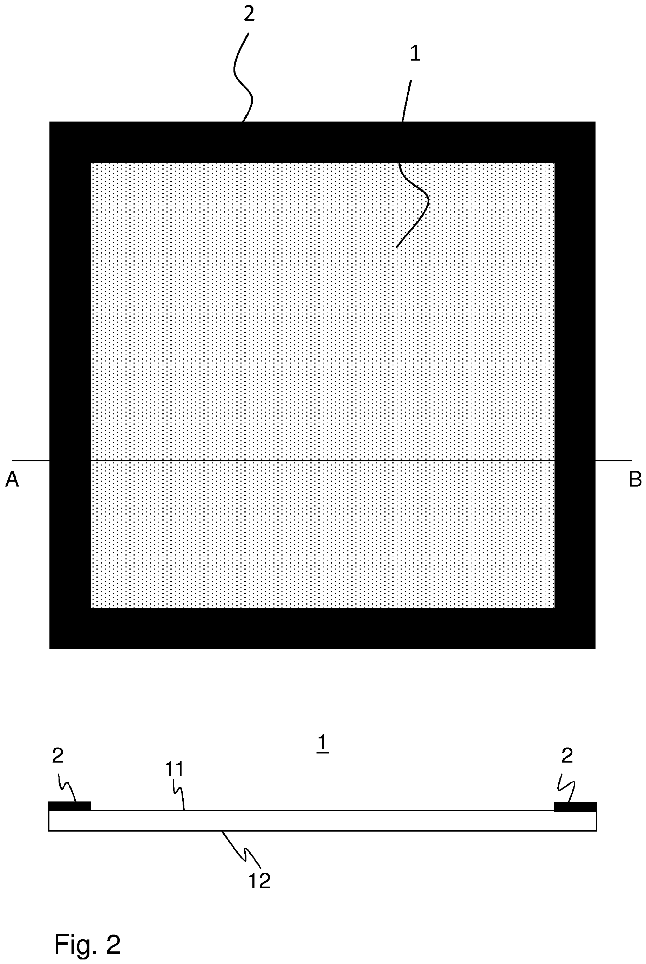

Fig. 2 zeigt in schematischer Darstellung ein erfindungsgemäßes Glaselement 1, hier beispielhaft dargestellt mit einer Beschichtung, welche in einem Bereich 2 des Glaselements 1 aufgebracht ist, wobei im oberen Bereich der Fig. 2 das Glaselement 1 in Aufsicht, im unteren Bereich der Fig. 2 dagegen in Seitenansicht entlang der Schnittlinie A-B dargestellt ist.

Das erfindungsgemäße Glaselement 1 ist thermisch vorgespannt und weist zwei einander gegenüberliegende, unter einer Druckspannung stehende Seitenflächen 11 und 12 auf, wobei die Druckspannung mindestens 40 MPa beträgt. Weiterhin beträgt die Verarbeitungstemperatur, also die Temperatur $T_4$, bei welche die Viskosität des Glases, aus welchem das Glaselement 1 gebildet ist, bei $10^4$ dPas liegt, höchstens 1350°C. Das Glas weist einen solchen Verlauf der Viskosität und des Ausdehnungskoeffizienten thermischen Ausdehnungskoeffizienten in Abhängigkeit von der Temperatur auf, dass die Größe

$$(750°C - T_{13})/(CTE_{Liq} – CTE_{Sol})$$

einen Wert von höchstens $5*10^6$ $K^2$ hat, wobei $CTE_{Liq}$ den linearen thermischen Ausdehnungskoeffizienten des Glases oberhalb der Glasübergangstemperatur $T_g$, $CTE_{Sol}$ den linearen thermischen Ausdehnungskoeffizienten des Glases im Temperaturbereich von 20°C bis 300°C und $T_{13}$ die Temperatur, bei welcher das Glas eine Viskosität von $10^{13}$ dPa·s besitzt, bezeichnen.

Bevorzugt liegt der Ausdehnungskoeffizient $CTE_{Sol}$ des Glases im Temperaturbereich von 20°C bis 300°C im Bereich von $3{,}5 \cdot 10^{-6}$ $K^{-1}$ bis $6 \cdot 10^{-6}$ $K^{-1}$.

Weiterhin bevorzugt ist das Glas so ausgewählt, dass dessen Ausdehnungskoeffizient im erweichten Zustand, also oberhalb der Glasübergangstemperatur $T_g$, $CTE_{Liq}$, im Bereich von $11 \cdot 10^{-6}$ $K^{-1}$ bis $45 \cdot 10^{-6}$ $K^{-1}$ liegt.

Gemäß einer weiteren Ausführungsform der Erfindung ist das Glaselement dadurch gekennzeichnet, dass das Glas eine Dichte von zumindest 2,4 Gramm pro Kubikzentimeter aufweist.

Die Dicke des Glaselements 1 liegt gemäß einer weiteren Ausführungsform der Erfindung zwischen größer oder gleich 2 mm und kleiner oder gleich 5 mm, bevorzugt zwischen größer oder gleich 3 mm und kleiner oder gleich 5 mm.

Gemäß einer nochmals weiteren Ausführungsform der Erfindung weist das Glas eine chemische Beständigkeit H, S, L von mindestens 2, 3, 3 oder besser auf, wobei die chemische Beständigkeit als hydrolytische Klasse H gemäß ISO 719, die Säureklasse S gemäß DIN 12116 und die Laugenklasse L gemäß ISO 695 bestimmt ist.

Weiterhin kann gemäß einer weiteren Ausführungsform der Erfindung das Glaselement 1, wie hier beispielhaft dargestellt, in mindestens einem Bereich 2 mit einer Beschichtung versehen sein. Bevorzugt handelt es sich bei einer solchen Beschichtung um eine glasflussbasierte Beschichtung oder ein Emaille.

Dabei ist gemäß einer bevorzugten Ausführungsform der Erfindung der thermische Ausdehnungskoeffizient der Beschichtung $CTE_{Coat}$ an den thermischen Ausdehnungskoeffizienten des Glaselements $CTE_{Sol}$ so angepasst, dass der Betrag der Differenz der thermischen Ausdehnungskoeffizienten,

$$\left| \Delta CTE \right| = \left| CTE_{Sol} – CTE_{Coat} \right|$$

nicht mehr als 1 ppm/K beträgt, bevorzugt nicht mehr als 0,5 ppm/K und besonders bevorzugt nicht mehr als 0,3 ppm/K.

Allgemein, ohne Beschränkung auf das in Fig. 2 gezeigte Beispiel, kann das Glaselement 1 allerdings auch ohne eine solche Beschichtung ausgebildet sein.

Bezugszeichenliste

| 1 | - Glaselement |
| 11, 12 | - Seitenflächen des Glaselements |
| 2 | - beschichteter Bereich des Glaselements |

**Patentansprüche**

1.  Thermisch vorgespanntes Glaselement (1) mit zwei gegenüberliegenden, unter einer Druckspannung stehenden Seitenflächen (11, 12), wobei die Druckspannung mindestens 40 MPa beträgt, wobei die Verarbeitungstemperatur, bei welcher die Viskosität des Glases des Glaselements (1) bei $10^4$ dPa·s liegt, höchstens 1350°C beträgt, und wobei das Glas einen Verlauf der Viskosität und des thermischen Ausdehnungskoeffizienten in Abhängigkeit von der Temperatur aufweist, derart, dass die Größe

$$(750°C - T_{13})/(CTE_{Liq} – CTE_{Sol})$$

einen Wert von höchstens $5*10^6$ $K^2$ hat, wobei $CTE_{Liq}$ den linearen thermischen Ausdehnungskoeffizienten des Glases oberhalb der Glasübergangstemperatur $T_g$, $CTE_{Sol}$ den linearen thermischen Ausdehnungskoeffizienten des Glases im Temperaturbereich von 20°C bis 300°C und $T_{13}$ die Temperatur, bei welcher das Glas eine Viskosität von $10^{13}$ dPa·s besitzt, bezeichnen, und wobei das Glaselement (1) gegeben ist durch folgende Zusammensetzung in Gew.-%:

| | |
|---|---|
| $SiO_2$ | 63-75 |
| $Al_2O_3$ | 8-21 |
| $Li_2O$ | 0-5 |
| $Na_2O$ | 0-14 |
| $K_2O$ | 0-5 |
| $MgO$ | 0-12 |
| $CaO$ | 0-18 |
| $SrO$ | 0-5 |
| $TiO_2$ | 0-5 |
| $ZrO_2$ | 0-9, |

wobei weiterhin Nebenbestandteile und/oder Spuren in Form von verfahrenstechnisch notwendigen Zusätzen wie Läutermitteln, $SnO_2$, $CeO_2$, $As_2O_3$, Cl⁻, F- oder Sulfate, oder Mitteln zum Einstellen einer geeigneten Farbe sowie Verunreinigungen aufgrund von in den Rohstoffen notwendigerweise enthaltenen Spuren enthalten sein können, wobei die Summe der Bestandteile bei unter 2 Gew.-% liegt.

2. Glaselement (1) nach dem vorstehenden Anspruch, **dadurch gekennzeichnet, dass** der Ausdehnungskoeffizient $CTE_{Sol}$ des Glases im im Temperaturbereich von 20°C bis 300°C im Bereich von $3,5 \cdot 10^{-6}$ K⁻¹ bis $6 \cdot 10^{-6}$ K⁻¹ liegt.

3. Glaselement (1) nach dem vorstehenden Anspruch, **dadurch gekennzeichnet, dass** das Glas so gewählt ist, dass dessen Ausdehnungskoeffizient im erweichten Zustand, also oberhalb der Glasübergangstemperatur $T_g$, $CTE_{Liq}$, im Bereich von $11 \cdot 10^{-6}$ K⁻¹ bis $45 \cdot 10^{-6}$ K⁻¹ liegt.

4. Glaselement (1) nach einem der vorstehenden Ansprüche, **dadurch gekennzeichnet, dass** das Glas eine Dichte von zumindest 2,4 Gramm pro Kubikzentimeter aufweist.

5. Glaselement (1) nach einem der vorstehenden Ansprüche, wobei das Glas eine chemische Beständigkeit H, S, L von mindestens 2, 3, 3 oder besser aufweist, wobei die chemische Beständigkeit als hydrolytische Klasse H gemäß ISO 719, die Säureklasse S gemäß DIN 12116 und die Laugenklasse L gemäß ISO 695 bestimmt ist.

6. Glaselement (1) nach einem der vorstehenden Ansprüche, wobei das Glaselement (1) in mindestens einem Bereich mit einer Beschichtung versehen ist, bevorzugt mit einer glasflussbasierten Beschichtung.

7. Glaselement (1) nach dem vorstehenden Anspruch, wobei der thermische Ausdehnungskoeffizient der Beschichtung $CTE_{Coat}$ an den thermischen Ausdehnungskoeffizienten des Glaselements $CTE_{Sol}$ so angepasst ist, dass der Betrag der Differenz der thermischen Ausdehnungskoeffizienten,

$$\left| \Delta CTE \right| = \left| CTE_{Sol} - CTE_{Coat} \right|$$

nicht mehr als 1 ppm/K beträgt, bevorzugt nicht mehr als 0,5 ppm/K und besonders bevorzugt nicht mehr als 0,3 ppm/K.

8. Glaselement (1) nach einem der vorstehenden Ansprüche mit einer Dicke zwischen größer oder gleich 2 mm und kleiner oder gleich 5 mm, bevorzugt zwischen größer oder gleich 3 mm und kleiner oder gleich 5 mm.

9. Verwendung eines Glaselements (1) gemäß einem der Ansprüche 1 bis 8 als Tür eines Garraums, beispielsweise in einem Elektroherd, insbesondere in einem Elektroherd, welcher eine Pyrolysefunktion aufweist, oder als Kochfläche, als Abdeckung für Heizelemente, insbesondere als Koch- oder Bratfläche, als Heizkörperabdeckung, als Grillfläche, als Kaminsichtscheibe, als Trägerplatte oder Ofenauskleidung in der Keramik-, Solar- oder Pharmaindustrie oder der Medizintechnik, insbesondere für Produktionsprozesse unter hochreinen Bedingungen, als Auskleidung von Öfen, in denen chemische oder physikalische Beschichtungsverfahren durchgeführt werden oder als chemisch resistente Laborausstattung, als Substrat für Hoch- oder extreme Niedrigtemperaturanwendungen, als Ofenfenster für Verbrennungsöfen, als Hitzschild zur Abschirmung heißer Umgebungen, als Abdeckung für Strahler, insbesondere IR-Strahler, IR-Strahler, die in Geräten verbaut sind, Reflektoren, Flutlichter, Projektoren, Beamer, Fotokopierer, für Anwendungen mit thermomechanischer Belastung, beispielsweise in Nachtsichtgeräten, als Wafersubstrat, als Substrat mit UV-Schutz, als Material für Gehäusekomponenten beispielsweise von elektronischen Geräten und/oder Abdeckgläser für IT wie Mobiltelefone, Laptops, Scannergläser usw., als Fassadenplatte als Brandschutzverglasung oder als Komponente für ballistischen Schutz.

**Claims**

1. A thermally toughened glass element (1) having two opposite faces (11, 12) that are under compressive stress, said compressive stress being at least 40 MPa, wherein the working point at which the glass of the glass element (1) has a viscosity of $10^4$ dPa·s is at most 1350 °C, and wherein a viscosity versus temperature profile and a coefficient of thermal expansion versus temperature profile of the glass are such that the variable

$$(750°C - T_{13})/(CTE_{Liq} - CTE_{Sol})$$

has a value of at most $5*10^6$ $K^2$, wherein $CTE_{Liq}$ is the coefficient of linear thermal expansion of the glass above glass transition temperature $T_g$, $CTE_{Sol}$ is the coefficient of linear thermal expansion of the glass in a temperature range from 20 °C to 300 °C, and $T_{13}$ is the temperature at which the glass has a viscosity of $10^{13}$ dPa·s; and wherein the glass element (1) is given by the following composition, in percent by weight:

| | |
|---|---|
| $SiO_2$ | 63-75 |
| $Al_2O_3$ | 8-21 |
| $Li_2O$ | 0-5 |
| $Na_2O$ | 0-14 |
| $K_2O$ | 0-5 |
| MgO | 0-12 |
| CaO | 0-18 |
| SrO | 0-5 |
| $TiO_2$ | 0-5 |
| $ZrO_2$ | 0-9; |

wherein furthermore minor constituents and/or traces may be contained in the form of necessary processing-related additives such as refining agents, $SnO_2$, $CeO_2$, $As_2O_3$, Cl-, F-, or sulphates, or agents for adjusting an appropriate colour, as well as impurities resulting from traces inevitably contained in the raw materials.

2. The glass element (1) according to the preceding claim, **characterised in that** the glass has an expansion coefficient $CTE_{Sol}$ in the temperature range from 20 °C to 300 °C ranging from $3.5*10^{-6}$ $K^{-1}$ to $6*10^{-6}$ $K^{-1}$.

3. The glass element (1) according to the preceding claim, **characterised in that** the glass is selected so that in the softened state thereof, that is above glass transition temperature $T_g$, the glass has an expansion coefficient $CTE_{Liq}$ ranging from $11*10^{-6}$ $K^{-1}$ to $45*10^{-6}$ $K^{-1}$.

4. The glass element (1) according to any one of the preceding claims, **characterised in that** the glass has a density of at least 2.4 grams per cubic centimetre.

5. The glass element (1) according to any one of the preceding claims, wherein the glass has a chemical resistance H, S, L of at least 2, 3, 3 or better, the chemical resistance being defined as hydrolytic class H according to ISO 719, acid class S according to DIN 12116, and alkali class L according to ISO 695.

6. The glass element (1) according to any one of the preceding claims, wherein the glass element (1) is provided with a coating, preferably a glass flux-based coating, in at least one area thereof.

7. The glass element (1) according to the preceding claim, wherein the coefficient of thermal expansion of the coating $CTE_{Coat}$ is matched with the coefficient of thermal expansion $GTE_{Sol}$ of the glass element such that the absolute value of the difference of the thermal expansion coefficients,

$$\left| \Delta CTE \right| = \left| CTE_{Sol} - CTE_{Coat} \right|,$$

is not greater than 1 ppm/K, preferably not greater than 0.5 ppm/K, and most preferably not greater than 0.3 ppm/K.

8. The glass element (1) according to any one of the preceding claims, having a thickness between greater than or equal to 2 mm and less than or equal to 5 mm, preferably between greater than or equal to 3 mm and less than or equal to 5 mm.

9. Use of a glass element (1) according to any one of claims 1 to 8 as a door of a cooking chamber, for example in an electric oven, in particular in an electric oven which has a pyrolysis function, or as a cooking surface, as a cover for heating elements, in particular as a cooking or frying surface, as a cover for heating radiators, as a grilling surface, as a fireplace pane, as a carrier sheet or as a furnace lining in ceramic, solar, or pharmaceutical industry or in medical technology, in particular for production processes under high-purity conditions, as a lining of furnaces in which chemical or physical coating processes are performed, or as chemically resistant laboratory equipment, as a substrate for high temperature or extreme low temperature applications, as a furnace window for combustion furnaces, as a heat shield for shielding hot environments, as a cover for radiators, in particular IR radiators, IR radiators installed in appliances, reflectors, floodlights, projectors, video projectors, photocopiers, for applications with thermo-mechanical loads, for example in night vision devices, as a wafer substrate, as a substrate with UV protection, as a material for housing components, for example of electronic devices, and/or cover glasses for IT, such as cell phones, laptop computers, scanner glasses, etc., as a facade panel, as fire protection glazing, or as a component for ballistic protection.

**Revendications**

1. Élément en verre (1) trempé thermiquement, comportant deux surfaces latérales (11, 12) opposées soumises à une contrainte de compression, dans lequel la contrainte de compression vaut au moins 40 MPa, dans lequel la température de traitement, à laquelle la viscosité du verre de l'élément en verre (1) se situe à $10^4$ dPa.s, est d'au maximum 1 350 °C, et dans lequel le verre présente une courbe de la viscosité et du coefficient de dilatation thermique en fonction de la température, telle, que la grandeur

$$(750\,°C - T_{13})/(CTE_{Liq} - CTE_{Sol})$$

a une valeur d'au maximum $5*10^6$ $K^2$, $CTE_{Liq}$ désignant le coefficient de dilatation thermique linéaire du verre au-dessus de la température de transition vitreuse $T_g$, $CTE_{Sol}$ désignant le coefficient de dilatation thermique linéaire du verre dans la plage de température de 20 °C à 300 °C et $T_{13}$ désignant la température à laquelle le verre a une viscosité de $10^{13}$ dPa.s, et dans lequel l'élément en verre (1) est donné par la composition suivante en % en poids :

| | |
|---|---|
| $SiO_2$ | 63-75 |
| $Al_2O_3$ | 8-21 |
| $Li_2O$ | 0-5 |
| $Na_2O$ | 0-14 |
| $K_2O$ | 0-5 |
| $MgO$ | 0-12 |
| $CaO$ | 0-18 |
| $SrO$ | 0-5 |
| $TiO_2$ | 0-5 |
| $ZrO_2$ | 0-9, |

dans lequel peuvent en outre être contenu(e)s des constituants accessoires et/ou des traces sous forme d'additifs technologiquement requis, tels que des agents d'affinage, $SnO_2$, $CeO_2$, $As_2O_3$, $Cl^-$, $F^-$ ou des sulfates, ou des agents destinés à conférer une couleur appropriée, ainsi que des impuretés dues à des traces nécessairement contenues dans les matières premières.

2. Élément en verre (1) selon la revendication précédente, **caractérisé en ce que** le coefficient de dilatation thermique $CTE_{Sol}$ du verre dans la plage de température de 20 °C à 300 °C se situe dans la plage de $3,5.10^{-6}$ $K^{-1}$ à $6.10^{-6}$ $K^{-1}$.

3. Élément en verre (1) selon la revendication précédente, **caractérisé en ce que** le verre est choisi de manière que son coefficient de dilatation à l'état amolli, c'est-à-dire au-dessus de la température de transition vitreuse $T_g$, $CTE_{Liq}$, se situe dans la plage de $11.10^{-6}$ $K^{-1}$ à $45.10^{-6}$ $K^{-1}$.

4. Élément en verre (1) selon l'une quelconque des revendications précédentes, **caractérisé en ce que** le verre présente une densité d'au moins 2,4 grammes par centimètre cube.

5. Élément en verre (1) selon l'une quelconque des revendications précédentes, dans lequel le verre présente une résistance chimique H, S, L d'au moins 2, 3, 3 ou mieux, la résistance chimique étant déterminée en tant que classe hydrolytique H selon ISO 719, la classe de résistance aux acides S selon DIN 12116 et la classe de résistance aux solutions alcalines L selon ISO 695.

6. Élément en verre (1) selon l'une quelconque des revendications précédentes, où l'élément en verre (1) est muni dans au moins une zone d'un revêtement, de préférence d'un revêtement à base de verre fondu.

7. Élément en verre (1) selon la revendication précédente, dans lequel le coefficient de dilatation thermique du revêtement $CTE_{Coat}$ est adapté au coefficient de dilatation thermique de l'élément en verre $CTE_{Sol}$ de telle façon que la valeur de la différence des coefficients de dilatation thermique

$$\left| \Delta CTE \right| = \left| CTE_{Sol} - CTE_{Coat} \right|$$

n'excède pas 1 ppm/K, de préférence n'excède pas 0,5 ppm/K et en particulier n'excède pas 0,3 ppm/K.

8. Élément en verre (1) selon l'une quelconque des revendications précédentes, ayant une épaisseur comprise entre supérieure ou égale à 2 mm et inférieure ou égale à 5 mm, de préférence entre supérieure ou égale à 3 mm et inférieure ou égale à 5 mm.

9. Utilisation d'un élément en verre (1) selon l'une quelconque des revendications 1 à 8 en tant que porte d'un espace de cuisson, par exemple dans une cuisinière électrique, en particulier dans une cuisinière électrique qui possède une fonction de pyrolyse, ou en tant que surface de cuisson, en tant que recouvrement pour éléments de chauffage, en particulier en tant que surface de cuisson ou de rôtissage, en tant que recouvrement de radiateurs, en tant que surface de gril, en tant que vitre d'observation pour cheminée, en tant que plaque de support ou habillage de four dans l'industrie de la céramique, solaire ou pharmaceutique ou dans la technique médicale, en particulier pour des processus de production dans des conditions de grande pureté, en tant qu'habillage de fours dans lesquels sont effectués des processus de revêtement physique ou chimique, ou en tant qu'appareillage de laboratoire résistant aux produits chimiques, en tant que substrat pour des applications à hautes ou extrêmement basses températures, en tant qu'hublots de fours pour fours de combustion, en tant qu'écran thermique pour l'isolement d'environnements chauds, en tant que couvercle pour émetteurs de rayonnement, en particulier des émetteurs de rayonnement IR, des émetteurs de rayonnement IR qui sont montées dans des appareils, pour des réflecteurs, phares, projecteurs, vidéoprojecteurs, photocopieurs, pour des applications faisant intervenir une exposition thermomécanique, par exemple dans des dispositifs de vision nocturne, en tant que substrat de circuits imprimés, en tant que substrat à protection anti-UV, en tant que matériau pour des composants de boîtiers par exemple d'appareils électroniques et/ou verres protecteurs pour TIC, tels que téléphones mobiles, ordinateurs portables, vitres de numériseurs, etc., en tant que plaque de façade comme vitrage de protection contre l'incendie ou en tant que composant pour la protection balistique.

Fig. 1

2

1

1

A — B

1

2

11

2

12

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4325656 C2
- WO 2015009483 A1
- US 2005145241 A
- US 2015107575 A1
- DE 2756555 A1
- EP 2338847 A1